# EUROPÄISCHE PATENTANMELDUNG

(11) **EP 2 148 509 A1**
(43) Veröffentlichungstag der Anmeldung: **27.01.2010**
(21) Anmeldenummer: 09008935.0
(22) Anmeldetag: 08.07.2009
(51) Int. Cl.: H04N 7/18, G08B 13/196, H04L 29/06, H04N 5/225

(54) **Kamera zum Einsatz in einem digitalen Netzwerk**

(30) Priorität: 22.07.2008 DE 202008009834 U
(71) Anmelder: Liebherr-Elektronik GmbH, 88131 Lindau (DE)
(72) Erfinder: Marquart, Volker, 88213 Bavendorf (DE); Brasch, Marcel, 88364 Wolfegg (DE)
(74) Vertreter: Laufhütte, Dieter

(57) **Zusammenfassung**

Die vorliegende Erfindung betrifft eine Kamera zum Einsatz in einem digitalen Netzwerk, insbesondere als Überwachungskamera in einem Arbeitsgerät. Erfindungsgemäß ist die vorliegende Erfindung durch einen integrierten Router mit mindestens zwei Ports zur Kommunikation mit weiteren Netzwerk-Komponenten, insbesondere mit einem ersten Port zur Kommunikation mit einem Endgerät und einem zweiten Port zur Kommunikation mit einer weiteren Kamera gekennzeichnet.

## Beschreibung

Die vorliegende Erfindung betrifft eine Kamera zum Einsatz in einem digitalen Netzwerk, insbesondere als Überwachungskamera in einem Arbeitsgerät.

In heutigen Arbeitsgeräten sind dabei oftmals Netzwerke wie z. B. Ethernet, CAN, RS232 oder Flexray für den Austausch digitaler Daten vorhanden. Soll bei solchen Arbeitsgeräten eine Kamera eingesetzt werden, z.B. um einen Bereich zu überwachen, so kann das vorhandene digitale Netzwerk dazu genutzt werden, die Bilddaten von der Kamera zu einem Endgerät, auf welchem diese dargestellt werden, zu übertragen.

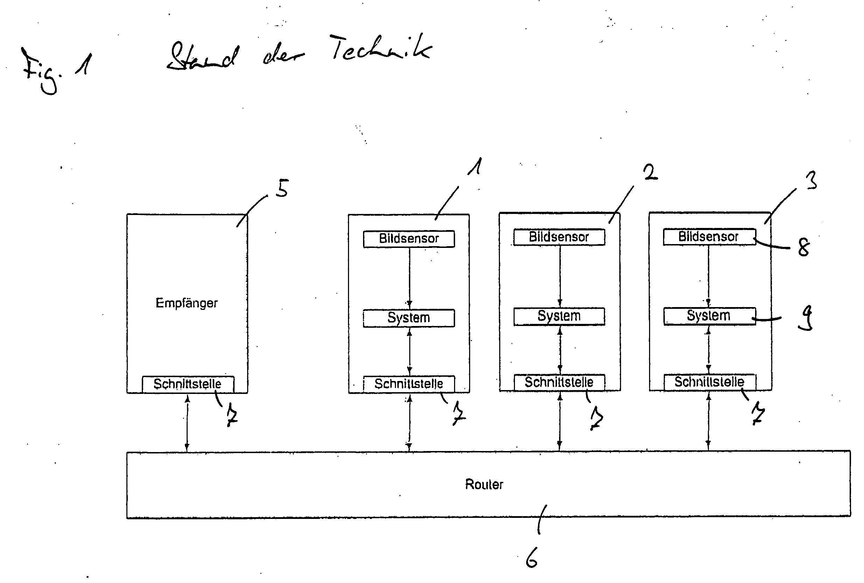

Für eine Anbindung von mehreren Kameras an ein Endgerät oder die Verwendung einer Kamera mit mehreren Endgeräten wird bei bekannten Kameras ein Router oder ein Switch eingesetzt. Figur 1 zeigt eine solche bekannte Verbindung mehrerer Kameras 1 bis 3 über den Router 6 mit einem Endgerät 5. Der Router 6 weist dabei pro Kamera einen Routerport auf, an welchen jeweils ein Port 7 der Kameras 1 bis 3 über ein Verbindungskabel angeschlossen ist. Weiterhin weist der Router einen Port für das Endgerät 5 auf, an welchem der Port 7 des Endgeräts über ein Verbindungskabel angeschlossen ist. Es muss also jeweils ein Kabel vom Endgerät 5 und von den Kameras 1 bis 3 zum Router 6 verlegt werden. Dies führt bei großen Entfernungen zu hohen Kabelkosten und einen hohen Verdrahtungsaufwand. Zudem ist es schwierig, bei solchen Systemen weitere Kameras nachzurüsten.

Aufgabe der vorliegenden Erfindung ist es daher, eine Kamera zum Einsatz in einem digitalen Netzwerk zur Verfügung zu stellen, welche eine vereinfachte Anbindung mehrerer Kameras an ein Endgerät oder einer Kamera an mehrere Endgeräte ermöglicht.

Diese Aufgabe wird von einer Kamera gemäß Anspruch 1 gelöst. Die erfindungsgemäße Kamera zum Einsatz in einem digitalen Netzwerk, insbesondere als Überwachungskamera in einem Arbeitsgerät, weist dabei einen integrierten Router mit mindestens zwei Ports zur Kommunikation mit weiteren Netzwerk-Komponenten auf. Diese weiteren Netzwerk-Komponenten sind dabei insbesondere Endgeräte und/oder weitere Kameras. Erfindungsgemäß wird also die Funktion des Routers in die Kamera integriert, so dass die erfindungsgemäße Kamera als Router für weitere Netzwerk-Komponenten, insbesondere für weitere Kameras, eingesetzt werden kann. Hierdurch können mehrere Kameras an einem Endgerät eingesetzt werden, ohne einen eigenständigen Router verwenden und mit allen Komponenten des Systems verdrahten zu müssen. Ebenso können mehrere Endgeräte mit einer Kamera eingesetzt werden, ohne dass auf einen eigenständigen Router zurückgegriffen werden muss.

Dabei können durch den integrierten Router der erfindungsgemäßen Kamera mit zwei Ports mehrere Netzwerk-Komponenten in Kette geschaltet werden, wobei die erfindungsgemäße Kamera ein Glied dieser Kette bildet und die Kommunikation zwischen zwei an den Ports angeschlossenen Netzwerk-Komponenten ermöglicht. Vorteilhafterweise weist die erfindungsgemäße Kamera dabei einen ersten Port zur Kommunikation mit einem Endgerät und einen zweiten Port zur Kommunikation mit einer weiteren Kamera auf. Die Kommunikation mit dem Endgerät muss dabei nicht notwendigerweise direkt sein, sondern kann auch indirekt z.B. über eine dazwischengeschaltete weitere Kamera erfolgen. Hierdurch können mehrere Kameras in Form einer Kette mit dem Endgerät verbunden werden, ohne dass jede einzelne Kamera über ein eigenes Kabel mit einem zentralen Router verbunden werden müßte.

Die vorliegende Erfindung ermöglicht damit ohne zusätzlichen Verdrahtungsaufwand den Einsatz mehrerer Komponenten. Zudem entfällt der Platzbedarf für einen eigenständigen Router sowie die teilweise erheblichen Kosten für einen Router als Stand-Alone-Lösung. Die Integration des Routers in die Kamera ist damit eine optimale Lösung für industrielle Anwendungen. An der Kamera müssen hierfür lediglich die beiden Ports sowie die entsprechende Unterstützung der Funktionalität im Hardware- bzw. Softwaredesign vorgesehen werden.

Grundidee ist somit, dass jede Kamera grundsätzlich mindestens einen Dateneingang und einen Datenausgang aufweist. Vorteilhafterweise kann die Kamera dabei über den zweiten Port Bilddaten von mindestens einer weiteren Kamera empfangen und zusammen mit den eigenen Bilddaten über den ersten Port an ein Endgerät weiterleiten. Hierdurch dient die erste Kamera als Router für die Daten der weiteren Kamera und, bei Verkettung weiterer Kameras, aller weiteren Kameras in der Kette.

Vorteilhafterweise stellen die beiden Ports der erfindungsgemäßen Kamera jedoch bidirektionale Kommunikationsschnittstellen dar, wobei die Kamera vorteilhafterweise Steuer- und/oder Konfigurationsdaten von dem Endgerät empfangen und/oder an die weitere Kamera weiterleiten kann. Der Datenaustausch erfolgt damit über beide Ports bidirektional, so dass der Eingang zum Empfang der Bilddaten von der weiteren Kamera gleichzeitig als Ausgang für die Steuer- und/oder Konfigurationsdaten dient und der Ausgang zum Senden der Bilddaten an das Endgerät gleichzeitig als Eingang für Steuer- und/oder Konfigurationsdaten dient. Je nach Realisierung können dabei die beiden Ports der Kamera physikalisch identisch ausgeführt werden. Durch die bidirektionale Kommunikation ist es z.B. möglich, die Kamera oder weitere Kameras zu- oder abzuschalten oder weitere Funktionen der Kameras wie z. B. die Framerate oder Komprimierungsfaktoren festzulegen.

Über den ersten Port erhält die Kamera demgemäß Steuer- und/oder Konfigurationsdaten von dem Endgerät und kann diese mittels des Routers an weitere nachgeschaltete Teilnehmer weiterleiten. Zudem leitet die Kamera über den ersten Port sowohl die eigenen als auch empfangene Bilddaten an den Empfänger weiter. Über den zweiten Port leitet die Kamera Steuer- und Konfigurationsdaten an eine weitere Kamera weiter und empfängt von dieser Bilddaten zur Weiterleitung. Die Kommunikation der Kamera mit dem Endgerät kann dabei jeweils direkt oder über eine in der Kette vorgeschaltete Kamera erfolgen.

Vorteilhafterweise ist die Kamera dabei über eine oder mehrere weitere Kameras mit dem Endgerät verbindbar und/oder zwei oder mehr weitere Kameras sind mit der Kamera verbindbar, so dass drei oder mehr Kameras in Form einer Kette miteinander verbindbar sind. Die erfindungsgemäße Kamera kann demgemäß vorteilhafterweise über eine dazwischen geschaltete Kamera, in welche ebenfalls ein Router integriert ist, mit dem Endgerät verbunden werden, bzw. mindestens eine weitere Kamera mit integriertem Router mit dem Endgerät verbinden. Jede Kamera dient damit gleichzeitig als Router für die in der Kette nachgeschalteten Kameras. Das System lässt sich somit beliebig verketten, wobei natürlich die Übertragungsbandbreite entsprechend geteilt wird.

Weiterhin vorteilhafterweise erfolgt auch die Stromversorgung der Kamera über die Ports. Insbesondere erfolgt dabei vorteilhafterweise die Stromversorgung der Kamera über den ersten Port und wird über den zweiten Port an die weitere Kamera weitergeleitet. Da die Versorgungsspannung über die Ports weitergeführt wird, sind keine zusätzlichen Versorgungsleitungen erforderlich.

Die vorliegende Erfindung umfasst dabei weiterhin ein Kamerasystem mit zwei oder mehr Kameras gemäß einem der vorangegangenen Ansprüche, welche vorteilhafterweise in Form einer Kette miteinander verbindbar oder verbunden sind. Bei den einzelnen Kameras des Kamerasystems kann es sich dabei um identische Kameras handeln. Es ist jedoch auch denkbar, unterschiedliche Kameras einzusetzen, in welche jedoch jeweils Router integriert sind, so dass die erfindungsgemäße Verkettung möglich wird.

Die vorliegende Erfindung umfasst weiterhin ein Visualisierungssystem mit mindestens einer Kamera, wie sie oben dargestellt wurde, und mit einem Endgerät, welches vorteilhafterweise eine Anzeigeeinheit zum Anzeigen der von den Kameras gelieferten Bilddaten aufweist. Durch den in der Kamera integrierten Router lässt sich ein solches Visualisierungssystem ohne großen Verkabelungsaufwand in Arbeitsgeräte integrieren. Ebenso vereinfacht sich die Nachrüstung eines solchen Systems mit weiteren Kameras.

Vorteilhafterweise weist das Endgerät dabei einen Port zur Kommunikation mit weiteren Netzwerkkomponenten auf, wobei über den Port Kameras in Form einer Kette mit dem Endgerät verbindbar oder verbunden sind.

Die vorliegende Erfindung umfasst weiterhin ein Arbeitsgerät, insbesondere ein verfahrbares Arbeitsgerät, mit mindestens einer und vorteilhafterweise mindestens zwei Kameras, wie sie oben beschrieben wurden. Weiterhin umfasst die vorliegende Erfindung ein Arbeitsgerät, insbesondere ein verfahrbares Arbeitsgerät, mit einem Visualisierungssystem, wie es oben beschrieben wurde. Die besonders vorteilhafte Verwendung der erfindungsgemäßen Kamera bzw. des erfindungsgemäßen Visualisierungssystems in einem Arbeitsgerät wurde bereits erläutert.

Vorteilhafterweise wird dabei die Kamera bzw. werden die Kameras bei einem verfahrbaren Arbeitsgerät der vorliegenden Erfindung zur Rückraumüberwachung eingesetzt. Die vorliegende Erfindung reduziert dabei die Anzahl der erforderlichen Netzwerk-Komponenten sowie die Verkabelung, wenn mehr als eine Kamera oder mehr als ein Endgerät benötigt werden.

Die vorliegende Erfindung wird nun anhand eines Ausführungsbeispiels sowie einer Zeichnung näher dargestellt. Dabei zeigen
- Figur 1:: ein Visualisierungssystem gemäß dem Stand der Technik und
- Figur 2:: ein Ausführungsbeispiel eines Visualisierungssystems gemäß der vorliegenden Erfindung, in welchem ein Ausführungsbeispiel einer erfindungsgemäßen Kamera zum Einsatz kommt.

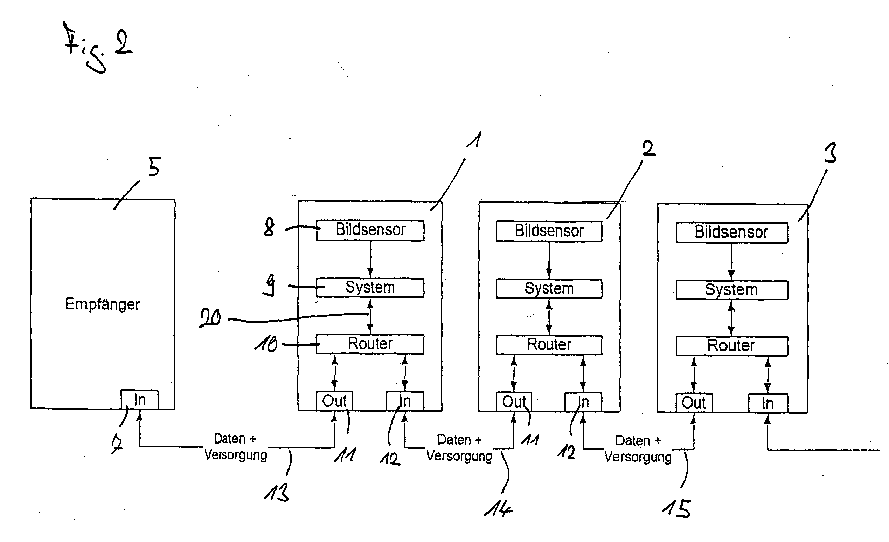

Bei dem in Figur 2 gezeigten Visualisierungssystem kommen Kameras 1 bis 3 gemäß der vorliegenden Erfindung zum Einsatz, in welche jeweils ein Router 10 integriert ist. Der integrierte Router 10 übernimmt dabei den Datenaustausch zwischen den Komponenten des Netzwerks, wozu er Ports 11 und 12 aufweist, über welche die Kamera mit weiteren Netzwerkkomponenten in Verbindung steht. Der Router 10 jeder Kamera übernimmt dabei im gezeigten Ausführungsbeispiel des Visualisierungssystems die Kommunikation mit den übrigen Kameras sowie mit einem Endgerät 5. Weiterhin stehen die Router 10 jeweils über die interne Verbindung 20 mit dem System 9 der jeweiligen Kamera in Verbindung, welches zusammen mit dem Bildsensors 8 die Kamerafunktionen bereitstellt. Der in die Kameras 1 bis 3 integrierte Router 10 empfängt dabei Datenpakete und sendet diese je nach Adresse an die Ports 11 oder 12 oder über die interne Verbindung 20 an das eigene System 9 weiter.

Hierdurch können mehrere Kameras in Form einer Kette mit dem Endgerät 5 verbunden werden, ohne dass jede einzelne Kamera über ein eigenes Kabel mit einem zentralen Router verbunden werden müßte. Jede Kamera weist dabei einen ersten Port 11 zur Kommunikation mit dem Endgerät 5 und einen zweiten Port 12 zur Kommunikation mit einer weiteren Kamera auf. Die Kommunikation mit dem Endgerät 5 kann dabei auch über zwischengeschaltete Kameras erfolgen. So erfolgt die Kommunikation der Kamera 2 mit dem Endgerät zunächst über den Port 11 mit Port 12 der Kamera 1 und dann weiter über den Port 11 der Kamera 1 mit Port 7 des Endgerätes 5. Dabei kann die Kamera 1 Bilddaten von der Kamera 2 empfangen und an das Endgerät 5 weiterleiten. Daten der Kamera 3 werden über die Kamera 2 und die Kamera 1 an das Endgerät 5 weitergeleitet. Hierzu ist lediglich eine Verbindungsleitung 13 zwischen dem Endgerät 5 und der Kamera 1, eine weitere Verbindungsleistung 14 zwischen Kamera 1 und Kamera 2 und eine weitere Verbindungsleitung 15 zwischen Kamera 2 und Kamera 3 notwendig. Ebenso kann eine weitere Kamera an Kamera 3 angeschlossen werden. Eine direkte Verbindung aller Kameras mit einem zentralen Router ist dagegen nicht mehr nötig. Hierdurch wird die Verkabelung erheblich vereinfacht.

Die Ports 11 und 12 der Kameras 1 bis 3 sowie der Port 7 des Endgerätes 5 stellen dabei bidirektionale Kommunikationsschnittstellen dar. Insofern ist die Unterscheidung zwischen Ein- und Ausgang bei den Ports 11 und 12 nur im Sinne der Verkettungsdarstellung in Figur 2 relevant. Der Datenaustausch erfolgt dabei bidirektional, um Konfigurations- und Steuerdaten in die Gegenrichtung zur Bilddatenübertragung übertragen zu können. Hierdurch ist es möglich, z. B. eine der Kameras zu- oder abzuschalten, die Framerate oder die Komprimierungsfaktoren festzulegen oder weitere Funktionen der Kameras anzusteuern. Über den Port 11 leitet die Kamera demgemäß sowohl eigene als auch empfangene Bilddaten an den Empfänger weiter und empfängt gleichzeitig Steuer- und Konfigurationsdaten. Über den Port 12 empfängt die Kamera Bilddaten und leitet Steuer- und Konfigurationsdaten weiter. Weiterhin wird über die Ports auch die Versorgungsspannung weitergeführt, so dass keine zusätzlichen Versorgungsleitungen erforderlich sind.

Erfindungsgemäß kann das System beliebig verkettet werden, wobei dann natürlich die Übertragungsbandbreite von mehreren Kameras geteilt wird. Bei ausreichender Übertragungsbandbreite sind jedoch beliebig viele Kameras in Kette verbindbar.

Das erfindungsgemäße Visualisierungssystem, bei welchem die von einer oder mehreren Kameras aufgenommenen Bilder auf dem Endgerät 5 darstellbar sind, kommt dabei besonders vorteilhafterweise bei Arbeitsmaschinen zu Überwachungsfunktionen zum Einsatz, insbesondere bei verfahrbaren Arbeitsmaschinen wie z. B. Baumaschinen zur Rückraumüberwachung. Ebenso ist die Verwendung bei Kranen, insbesondere bei verfahrbaren Kranen, mit erheblichen Vorteilen verbunden. Weitere Anwendungsmöglichkeiten sind landwirtschaftliche Fahrzeuge, Nutzfahrzeuge, maritime Anwendungen und die Objektsicherung.

Bei Arbeitsgeräten, insbesondere bei Baumaschinen oder Kranen, ist davon auszugehen, dass aufgrund deren Größe zwei oder mehr Kameras zur Rückraumüberwachung verwendet werden müssen, welche dabei üblicherweise sehr nah beieinander montiert sind, jedoch weit weg von dem Endgerät 5. Da erfindungsgemäß das Bild der zweiten und jeder weiteren Kamera über die erste Kamera weitergeleitet wird, ist zwischen den einzelnen Kameras jeweils nur ein kurzes Kabel erforderlich. Lediglich die erste Kamera muss dann über ein längeres Kabel mit dem Endgerät 5 verbunden werden.

Hierdurch ergibt sich bei Baumaschinen bereits eine Ersparnis von etlichen Metern Kabel. Bei Kranauslegern, bei welchen die Kameras dann vorteilhafterweise als Arbeitskameras zum Beobachten der Last bzw. des Hubortes eingesetzt werden, können sogar Kabellängen von bis zu mehreren 100 Metern eingespart werden.

Zum Einsparpotential der Verkabelung kommt noch der Vorteil entsprechender Flexibilität, da am Endgerät 5, z.B. der zentralen Steuerung, immer nur ein Port benötigt wird und dennoch beliebig viele Kameras eingesetzt werden können. Das nachträgliche Anbringen weiterer Kameras ist dabei ebenfalls wesentlich einfacher, da nicht mehr der gesamte Kabelkanal geöffnet werden muss. Zudem muss kein zusätzlicher Router verwendet werden, welcher insbesondere bei nachträglich eingesetzten Lösungen nur schwer am Arbeitsgerät zu integrieren ist.

Durch die vorliegende Erfindung ergibt sich demgemäß eine ebenso kostengünstige wie komfortable Möglichkeit, mehrere Kameras mit einem Endgerät bzw. mehrere Endgeräte mit einer Kamera zu verbinden.

## Patentansprüche

1. Kamera zum Einsatz in einem digitalen Netzwerk, insbesondere als Überwachungskamera in einem Arbeitsgerät, **gekennzeichnet durch** einen integrierten Router mit mindestens zwei Ports zur Kommunikation mit weiteren Netzwerk-Komponenten, insbesondere mit einem ersten Port zur Kommunikation mit einem Endgerät und einem zweiten Port zur Kommunikation mit einer weiteren Kamera.

2. Kamera nach Anspruch 1, wobei die an die Kamera angeschlossenen Netzwerkkomponenten über den Router der Kamera miteinander kommunizieren können.

3. Kamera nach Anspruch 1, wobei die Kamera über den zweiten Port Bilddaten von mindestens einer weiteren Kamera empfangen und zusammen mit den eigenen Bilddaten über den ersten Port an ein Endgerät weiterleiten kann.

4. Kamera nach Anspruch 1 oder 3, wobei die beiden Ports bidirektionale Kommunikationsschnittstellen darstellen, wobei die Kamera vorteilhafterweise Steuer- und/oder Konfigurationsdaten von dem Endgerät empfangen und/oder an die weitere Kamera weiterleiten kann.

5. Kamera nach Anspruch 1, wobei die Stromversorgung über die Ports erfolgt, so dass die Stromversorgung der Kamera vorteilhafterweise über den ersten Port erfolgt und über den zweiten Port an die weitere Kamera weitergeleitet wird.

6. Kamera nach einem der vorangegangenen Ansprüche, wobei die Kamera über eine oder mehrere weitere Kameras mit dem Endgerät verbindbar ist und/oder zwei oder mehr weitere Kameras mit der Kamera verbindbar sind, so dass drei oder mehr Kameras in Form einer Kette miteinander verbindbar sind.

7. Kamerasystem mit zwei oder mehr Kameras gemäß einem der vorangegangenen Ansprüche, welche vorteilhafterweise in Form einer Kette miteinander verbindbar oder verbunden sind.

8. Visualisierungssystem mit mindestens einer Kamera gemäß einem der vorangegangenen Ansprüche und einem Endgerät, welches vorteilhafterweise eine Anzeigeeinheit zum Anzeigen der von den Kameras gelieferten Bilddaten aufweist.

9. Visualisierungssystem nach Anspruch 8, wobei das Endgerät einen Port zur Kommunikation mit weiteren Netzwerk-Komponenten aufweist, wobei über den Port Kameras in Form einer Kette mit dem Endgerät verbindbar oder verbunden sind.

10. Arbeitsgerät, insbesondere verfahrbares Arbeitsgerät, mit mindestens einer, vorteilhafterweise mindestens zwei Kameras gemäß einem der Ansprüche 1 bis 6.

11. Arbeitsgerät nach Anspruch 10 mit einem Visualisierungssystem nach Anspruch 8 oder 9.

12. Verfahrbares Arbeitsgerät nach Anspruch 11, wobei die Kamera bzw. die Kameras zur Rückraumüberwachung eingesetzt werden.
